(19) Europäisches Patentamt
European Patent Office
Office européen des brevets

(11) **EP 2 681 258 B1**

(12) **EUROPÄISCHE PATENTSCHRIFT**

(45) Veröffentlichungstag und Bekanntmachung des Hinweises auf die Patenterteilung:
**13.05.2015 Patentblatt 2015/20**

(21) Anmeldenummer: **12706258.6**

(22) Anmeldetag: **01.03.2012**

(51) Int Cl.:
*C08L 53/02* (2006.01)   *C08G 69/18* (2006.01)
*C08L 77/02* (2006.01)   *C08K 5/3412* (2006.01)

(86) Internationale Anmeldenummer:
**PCT/EP2012/053485**

(87) Internationale Veröffentlichungsnummer:
**WO 2012/117040 (07.09.2012 Gazette 2012/36)**

(54) **VERWENDUNG VON VINYLAROMAT-DIEN-COPOLYMEREN IN LACTAM-ZUSAMMENSETZUNGEN**

USE OF VINYLAROMATIC-DIENE COPOLYMERS IN LACTAM COMPOSITIONS

UTILISATION DE COPOLYMÈRES DE COMPOSÉ AROMATIQUE VINYLIQUE/DIÈNE DANS DES COMPOSITIONS DE LACTAME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2011 EP 11156572**

(43) Veröffentlichungstag der Anmeldung:
**08.01.2014 Patentblatt 2014/02**

(73) Patentinhaber: **BASF SE**
**67056 Ludwigshafen (DE)**

(72) Erfinder:
• **DESBOIS, Philippe**
  **68535 Edingen-Neckarhausen (DE)**
• **KNOLL, Konrad**
  **68199 Mannheim (DE)**
• **MÖLLER, Anna, Karina**
  **64295 Darmstadt (DE)**

(56) Entgegenhaltungen:
EP-A1- 0 459 199   CN-A- 1 380 349
US-A- 3 298 977   US-A1- 2011 003 928

**Beschreibung**

Die vorliegende Erfindung betrifft die Verwendung von Vinylaromat-Dien-Copolymeren in Lactam-Zusammensetzungen. Die Erfindung betrifft auch Lactam-Schmelzen, die statistische Vinylaromat-Dien-Copolymere enthalten. Die Erfindung betrifft ferner die Herstellung von Lactam-Schmelzen sowie deren Verwendung, bevorzugt im Bereich der aktivierten anionischen Lactam-Polymerisation, z.B. für die Herstellung von Gusspolyamiden.

Verschieden aufgebaute Vinylaromat-Dien-Copolymere, wie beispielsweise Styrol-Butadien-Copolymere, sind seit vielen Jahren bekannt. Sie können als Zusätze zur Herstellung verschiedener Formmassen eingesetzt werden. Die erfindungsgemäß eingesetzten, statistischen Vinylaromat-Dien-Copolymere beinhalten mindestens einen Abschnitt in ihrer Struktur, der ein Dien und einen Vinylaromaten statistisch verteilt enthält. Diese Copolymere können nach in der Literatur bekannten Verfahren hergestellt werden, siehe beispielsweise EP-A 0 766 706 und EP-A 0 859 803.

In DE-A 44 20 952 werden Kautschuk-elastische Blockcopolymere beschrieben, die aus mindestens einem, eine Hartphase aus Styrol bildenden Block A, einem Butadien aufweisenden, eine kautschukelastische Weich-Phase bildenden Block B und mindestens einem Styrol und Butadien enthaltenden, elastomeren Block B/A bestehen. Das Verhältnis von Block A zu Block B/A ist dabei von Bedeutung.

Verschiedene Verfahren zur Herstellung von Polyamiden sind seit vielen Jahren bekannt. Typische Polyamide sind teilkristalline und amorphe Polyamid-Harze mit einem Molekulargewicht von mindestens 5000 g/Mol, die gewöhnlich als Nylon bezeichnet werden. Solche Polyamide werden zum Beispiel in US 2,512,606 und US 3,393,210 beschrieben.

Polyamide können einerseits durch Kondensation äquimolarer Mengen einer gesättigten oder aromatischen Dicarbonsäure mit einem gesättigten oder aromatischen Diamin, oder aber durch Kondensation von $\omega$-Aminocarbonsäuren bzw. durch Polyaddition von entsprechenden Lactamen hergestellt werden. Typische Beispiele für Polyamide sind Polyhexamethylen-adipinsäureamid (Nylon 66) sowie das durch Ringöffnung von Lactamen erhaltene Polyamid Polycaprolactam.

Die aktivierte anionische Polymerisation von Lactamen zur Herstellung von Polyamiden ist ein chemisch sehr empfindlicher Prozess, der durch viele Zusatzstoffe gestört wird. So sind übliche Verdickungsmittel zur Beeinflussung der Viskosität, wie Polyacrylamide, nachteilig für die Polymerisationsreaktion oder sie sind in den Lactam-Schmelzen wenig löslich.

Die Herstellung von Polyamid-Formkörpern durch aktivierte anionische Lactam-Polymerisation wird im Allgemein bereits 1966 im Kunststoff-Handbuch (Band VI, Polyamide, Carl-Hanser-Verlag, 1966) beschrieben. Dort werden auch andere Schlagzähigkeits-Modifikatoren zugesetzt, um die Festigkeit der Polyamid-Formteile zu verbessern. Bei den verwendeten Schlagzähigkeits-Modifikatoren handelt es sich insbesondere um Polyalkylenglykole (siehe J.L.M. van der Loos, ACS Symposium Series 1985, 270, 181-191). Bei den Schlagzähigkeits-Modifikatoren (auch "Impact Modifier") gibt es verschiedene Typen, beispielsweise solche, die mit dem molekularen Aufbau der Polymere interagieren (z. B. Polyalkylenglykole und Polyetheramine), oder aber solche, die mit dem molekularen Aufbau der Polymere nicht interagieren sondern eine Mischung (bzw. einen Blend) mit dem Polymer bilden.

Überraschend wurde gefunden, dass die Viskosität von Lactam-Zusammensetzungen, insbesondere von Lactam-Schmelzen, durch den Zusatz spezieller Vinylaromat-Dien-Copolymerer (A) deutlich verbessert werden kann. Durch diese Maßnahme wird die aktivierte anionische Polymerisation im Allgemeinen verbessert, da dieser Zusatz nicht (oder nur unbedeutend) störend eingreift. Die erfindungsgemäßen Lactam-Zusammensetzungen eignen sich auch besonders zur Herstellung verstärkter und gefüllter Guss-Polyamidteile. Insbesondere wird es dadurch möglich, Faser-förmige und/oder Matten-förmige Verstärkungsstoffe (z.B. aus Glas, Kohlenstoff oder Aramid) in die Polyamid-Zusammensetzungen einzuarbeiten. Die Füllstoffe/Verstärkungsstoffe sedimentieren mit einer geeigneten Geschwindigkeit in der Schmelze, was eine gute und homogene Verteilung in den Formkörpern ermöglicht und zu verbesserten Eigenschaften der Produkte führt.

Ein Gegenstand der Erfindung sind Lactam-Zusammensetzungen, insbesondere Lactam-Schmelzen mit verbesserter Viskosität in der Schmelze, die folgende Komponenten enthalten:

     a) mindestens ein Vinylaromat-Dien-Copolymer (A),
     b) mindestens eine Lactam-Komponente (B), insbesondere $\varepsilon$-Caprolactam,
     c) ggf. einen oder mehrere Füll- und/oder Verstärkungsstoffe (C)
     d) ggf. einen oder mehrere Zusatzstoffe (Z).

Diese Lactam-Zusammensetzungen, weisen auch besonders günstige Dichte-Eigenschaften auf, wobei diese natürlich auch von der Art und dem Umfang des eingesetzten Füll- und/oder Verstärkungsstoffs abhängt. Eine Abstimmung der Dichte-Eigenschaften von Lactam-Zusammensetzung und Verstärkungsstoff (z.B. Aramidfaser-Matte) ist für die mechanischen Eigenschaften des Formteils von Bedeutung.

Die Erfindung betrifft insbesondere eine Lactam-Zusammensetzung (mit verbesserter bzw. erhöhter Viskosität in der Schmelze), die folgende Komponenten enthält:

a) 3 bis 25 Gew.-%, bevorzugt 5 bis 20 Gew.-% (bezogen auf die Summe der Komponenten A und B), mindestens eines statistischen Vinylaromat-Dien-Copolymers (A), wobei das statistische Vinylaromat-Dien-Copolymer (A) besteht aus mindestens einem, aus vinylaromatischen Monomeren aufgebauten, eine Hartphase bildenden Block (S) und mindestens einem, vinylaromatische Monomere und Dien-Monomere aufweisenden, statistischen, eine Weichphase bildenden Block (S/B),

b) 75 bis 97 Gew.-%, bevorzugt 80 bis 95 Gew.% (bezogen auf die Summe der Komponenten A und B), mindestens einer Lactam-Komponente (B), insbesondere $\varepsilon$-Caprolactam,

c) ggf. einen oder mehrere Füll- und/oder Verstärkungsstoffe (C), sowie

d) ggf. einen oder mehrere Zusatzstoffe (Z).

Die Erfindung betrifft insbesondere eine Lactam-Zusammensetzung, dadurch gekennzeichnet, dass in dem statistischen Vinylaromat-Dien-Copolymer (A) einerseits die Monomere Styrol, alpha-Methylstyrol, m-Methylstyrol und/oder p-Methylstyrol und andererseits die Monomere Butadien, Isopren und/oder 2,3-Dimethylbutadien zum Einsatz kommen.

Die Erfindung betrifft insbesondere eine Lactam-Zusammensetzung, dadurch gekennzeichnet, dass das statistische Vinylaromat-Dien-Copolymer (A) aus Styrol und Butadien aufgebaut ist.

Die Erfindung betrifft insbesondere eine Lactam-Zusammensetzung, dadurch gekennzeichnet, dass im statistischen Vinylaromat-Dien-Copolymer (A) das Molekulargewicht des Blocks S/B zwischen 10.000 und 250 000 liegt, und das Molekulargewicht des Blocks S (bzw. der Blöcke S) zwischen 5.000 und 200 000 [g/mol] liegen, und das gesamte Molekulargewicht des Vinylaromat-Dien-Copolymers (A) im Bereich von 80.000 bis 300.000[g/mol] liegt.

Die Erfindung betrifft insbesondere eine Lactam-Zusammensetzung, dadurch gekennzeichnet, dass als Lactame-Komponente $\varepsilon$-Caprolactam, Piperidon, Pyrrolidon, Lauryllactam oder eine Mischung zweier oder mehrerer der genannten Monomere eingesetzt wird.

Die Erfindung betrifft insbesondere eine Lactam-Zusammensetzung, dadurch gekennzeichnet, dass sie Füll- und/oder Verstärkungsstoffe (C) in einer Menge von 5 bis 80 Gew.-% (bezogen auf die Summe aller Komponenten A, B, C und Z) enthält.

Die Erfindung betrifft insbesondere eine Lactam-Zusammensetzung, dadurch gekennzeichnet, dass sie Zusatzstoffe (Z) in einer Menge von 1 bis 10 Gew.-% (bezogen auf die Summe aller Komponenten A, B, C und Z) enthält.

Die Erfindung betrifft insbesondere eine Lactam-Zusammensetzung, dadurch gekennzeichnet, dass sie in der Schmelze bei 140° C eine Viskosität von 10 bis 1000 mPas aufweist. Die Erfindung betrifft insbesondere eine Lactam-Zusammensetzung, dadurch gekennzeichnet, dass sie in der Schmelze bei 140° C eine Viskosität von 10 bis 500 mPas aufweist. Die Dichte der Lactam-Zusammensetzungen (ohne Füll- und Verstärkungsstoffe) beträgt z. B. von 1,06 bis 1,20 g/ml.

Gegenstand ist auch die Herstellung der beschriebenen Lactam-Zusammensetzung durch Vermischen der Komponenten.

Gegenstand ist auch die Verwendung eines statistischen Vinylaromat-Dien-Copolymers (A), das aus mindestens einem, aus vinylaromatischen Monomeren aufgebauten, eine Hartphase bildenden Block (S) und mindestens einem, vinylaromatische Monomere und Dien-Monomere aufweisenden, statistischen, eine Weichphase bildenden Block (S/B) besteht, zur Herstellung einer Lactam-Schmelze.

Die Erfindung betrifft auch die Verwendung einer Lactam-Zusammensetzung wie oben beschrieben zur Herstellung von Polyamiden durch aktivierte anionische Polymerisation (Gusspolyamiden), ggf. unter Verwendung eines Katalysators (K) und/oder eines Aktivators (V).

Die Erfindung betrifft insbesondere einen Polyamid-Artikel, insbesondere Gusspolyamid-Artikel, hergestellt aus einer Lactam-Zusammensetzung nach einem der Ansprüchen 1 bis 9, ggf. unter Verwendung eines Katalysators (K) und/oder eines Aktivators (V).

Die Erfindung betrifft ferner eine Verfahren zur Herstellung von Polyamiden unter Verwendungen einer Lactam-Zusammensetzung wie oben beschrieben, dadurch gekennzeichnet, dass die Lactam-Zusammensetzung in geschmolzener Form, ggf. in Anwesenheit eines Katalysators (K) und/oder eines Aktivators (V), nach dem Verfahren der aktivierten anionischen Polymerisation in Gusspolyamide überführt wird.

Ein weiterer Gegenstand der vorliegenden Erfindung ist die Verwendung der eine Lactam-Schmelze ergebenden Lactam-Zusammensetzung zur Herstellung von Polyamiden, insbesondere über das Verfahren der aktivierten anionischen Polymerisation, insbesondere zur Herstellung von verstärkten und/oder gefüllten Guss-Polyamidteilen. Ein Gegenstand der Erfindung ist auch ein Verfahren zur Herstellung dieser Polyamide sowie die durch Verwendung der Lactam-Zusammensetzung hergestellten Polyamide bzw. Polyamid-Artikel bzw. Polyamid-Teile.

Die erfindungsgemäß eingesetzten statistische Vinylaromat-Dien-Copolymere (A) bestehen insbesondere aus mindestens einem, aus vinylaromatischen Monomeren (wie Styrol) aufgebauten, eine Hartphase bildenden Blocks A, und mindestens einem, vinylaromatische Monomere (wie Styrol) sowie ein Dien (wie Butadien) aufweisenden (elastomeren), eine Weichphase bildenden Block (B/A). Die Glastemperatur $T_g$ des Blocks A liegt dabei über 25°C und die Glastemperatur $T_g$ des Blocks B/A liegt unter 25°C liegt. Das Phasenvolumen-Verhältnis von Block A zu Block (B/A) ist so gewählt, dass der Anteil der Hartphase am gesamten Copolymer 10 bis 40 Vol.-% und der Gewichtsanteil des Diens weniger als 50 Gew.-% betragen. Der relative Anteil an 1,2-Verknüpfungen des Polydiens, bezogen auf die Summe an 1,2- und 1,4-cis/trans-Verknüpfungen soll in der Regel unterhalb von 15% liegen.

Die erfindungsgemäß eingesetzten statistischen Vinylaromat-Dien-Copolymere (A) enthalten vorzugsweise als vinylaromatische Monomer-Komponente Styrol, alpha-Methylstyrol und/oder Vinyltoluol. Die erfindungsgemäß eingesetzten statistischen Vinylaromat-Dien-Copolymere enthalten vorzugsweise als Dien-Komponente 1,3-Butadien und/oder Isopren. Die statistischen Vinylaromat-Dien-Copolymere (A) haben bevorzugt ein Molekulargewicht des Blocks B/A zwischen 10.000 und 250 000, und ein Molekulargewicht des Blocks A (bzw. der Blöcke A) zwischen 5.000 und 200 000 [g/mol].

Das gesamte Molekulargewicht des erfindungsgemäß eingesetzten Vinylaromat-Dien-Copolymers liegt oftmals im Bereich von 80.000 bis 300.000 [g/mol], insbesondere von 120.000 bis 290.000 [g/mol].

Die erfindungsgemäß eingesetzten statistische Vinylaromat-Dien-Copolymere (A) haben in der Regel eine Monomer-Zusammensetzung aus 25 bis 60 Gew.% Dien, insbesondere Butadien, und 75 bis 40 Gew.% an vinylaromatischen Monomeren, insbesondere Styrol. Die Brutto-Monomer-Zusammensetzung ist häufig 75 bis 40 Gew.-% Styrol und 25 bis 60 Gew.-% an Butadien.

Die erfindungsgemäß eingesetzten statistische Vinylaromat-Dien-Copolymere (A) haben bevorzugt einen Butadien-Anteil im Weichblock (B/A) zwischen 35 und 70% und einen Styrol-Anteil zwischen 65 und 30%, wobei die Weichphase (B/A) insbesondere ein statistisches Copolymerisat aus Styrol und Butadien ist.

Die statistische Vinylaromat-Dien-Copolymere haben oftmals einen einfachen Aufbau wie in EP-A 0 859 803 beschrieben, wie z.B.

$$(A\text{-}(B/A)\,)_n$$

$$(A\text{-}(B/A)\,)_n\text{-}A$$

wobei A hier für den vinylaromatischen Block, insbesondere einen Styrol-Block und (B/A) für den statistisch aus Dien- und vinylaromatischen Einheiten aufgebauten Block, insbesondere einen statistischen Butadien/Styrol-Block stehen. Der Index n bedeutet eine natürliche Zahl von 1 bis 10, beispielsweise 1, 2 oder 3. Der Aufbau kann jedoch auch komplexer sein. Oftmals kommt ein Vinylaromat-Dien-Copolymer zum Einsatz mit dem Aufbau A-(B/A) - A, wobei (B/A) vorzugsweise ein statistisch aufgebautes Copolymer aus Styrol und Butadien ist. In den statistischen Vinylaromat-Dien-Copolymeren (A) können ein (größerer) statistischer Block (B/A) und auch mehrere (z.B. zwei) kleinere Vinylaromat-Blöcke A vorhanden sein.

Die vorliegende Erfindung betrifft insbesondere die Verwendung von statistischen Vinylaromat-Dien-Copolymeren (A), welche bevorzugt auf Styrol und Butadien basieren.

In einer weiteren bevorzugten Ausführungsform enthält das eingesetzte Copolymer (A) einen Styrol-Anteil von 60 bis 70 Gew.-%, insbesondere von etwa 65 Gew.-%.

Das eingesetzte Vinylaromat-Dien-Copolymer (A) hat bevorzugt eine "Weichphase" von mindestens 70-Gew. %. In der Weichphase (Weichblock) liegen die Styrol- und ButadienEinheiten statistisch verteilt vor. Geeignete statistische Block-Copolymere sind beispielsweise unter den Handelsnamen Styroflex 2G66 (Hersteller BASF SE, Ludwigshafen) erhältlich.

Die Herstellung der statistischen Vinylaromat-Dien-Copolymere (A) erfolgt z.B. nach EP-A 0 859 803 durch anionische Polymerisation, z. B. mittels Lithium-alkyl in einem nicht polaren Lösungsmittel, wobei die Polymerisation mindestens einer Weichphase (B/A) in Gegenwart z.B. eines löslichen Kaliumsalzes vorgenommen wird, wie z.B. Kalium-2,3-dimethyl-3-pentanolat, Kalium-3,7-dimethyl-3-oktanolat oder Kalium-3-ethyl-3-pentanolat.

Die genannten statistischen Vinylaromat-Dien-Copolymere (A) können in der Lactam-Komponente (B), z.B. in der Lactam-Schmelze gelöst werden und können dabei als besonders geeignete Schlagzähigkeits-Modifikatoren fungieren.

Diese erfindungsgemäßen Lactam-Zusammensetzungen können als zusätzliche Komponenten auch weitere Komponenten, wie Kautschuke und/oder Füll- und/oder Verstärkungsstoffe (C) (insbesondere faser- oder teilchenförmige Füllstoffe) sowie weitere Zusätze (Z) enthalten.

Gegenstand der Erfindung ist auch die Verwendung von Lactam-Schmelzen, die mindestens ein statistisches Vinylaromat-Dien-Copolymer (A) enthalten, in einem Reaktionsspritzguss (RIM)-Verfahren zur Herstellung von Gusspolyamid-Formkörpern, Gusspolyamid-Fasern und Gusspolyamid-Folien. Gegenstand der Erfindung sind auch die hierdurch erhältlichen Fasern, Folien und Formkörper.

Als Lactam-Komponente (B) eignen sich insbesondere ε-Caprolactam, Piperidon, Pyrrolidon, Lauryllactam sowie deren Mischungen. In einer bevorzugten Ausführungsform der Erfindung wird als Lactam-Komponente (B) eine Substanz aus der Gruppe umfassend ε-Caprolactam, Lauryllactam und deren Mischungen eingesetzt. Besonders bevorzugt wird ε-Caprolactam eingesetzt.

Die Lactam-Komponente (B) in den Zusammensetzungen, wie z.B. ε-Caprolactam, kann nach bekannten Verfahren anionisch polymerisiert werden. Hierzu werden in der Regel ein Katalysator (K) und ein Aktivator (V) benötigt. Häufig werden auch noch weitere Zusätze bzw. Additive (Z) z.B. zur Schlagzähigkeits-Modifikation zugesetzt, die im Allgemeinen bereits vor der Polymerisation in die Lactam-Schmelze eingebracht werden.

Für viele Einsatzgebiete ist es ferner wünschenswert, die guten mechanischen Eigenschaften von Gusspolyamiden durch die Verwendung von faserhaltigen Verstärkungsstoffen (C), wie Glasfasern zu steigern. Hierbei ist die Viskosität der eingesetzten Lactam-Schmelzen ein wichtiges Kriterium. Diese Lactam-Schmelzen mit erhöhter aber nicht zu hoher Viskosität eignen sich insbesondere für Kurzglasfasern, da sie deren Sedimentation verlangsamen oder sogar verhindern. In EP-A 0 459 199 werden Lactam-Schmelzen mit erhöhter Viskosität beschrieben, die gelöste Blockcopolymere enthalten und die eine Sedimentation von Kurzglasfasern verlangsamen. Ein Nachteil dieser Lactam-Schmelzen besteht darin, dass sie für die Verwendung von Glasfasergewebe ungeeignet sind. Bei der Verwendung von Glasfasergewebe ist es wünschenswert, dass die Lactam-Schmelzen eine möglichst niedrige Viskosität aufweisen, da das Glasfasergewebe ansonsten nicht vollständig durchtränkt wird, und die Werkzeugform im RIM-Prozesses nicht vollständig gefüllt werden kann.

Die erfindungsgemäß eingesetzten, statischen Vinylaromat-Dien-Copolymere (mit einer statistischen Weichphase) werden in EP-A 0 459 199 nicht beschrieben. Über Additivhaltige Lactam-Schmelzen, insbesondere mit erhöhten Additivkonzentrationen, die sich auch für die Herstellung von Glasfasergewebe-verstärktem Gusspolyamid eignen, ist bisher wenig bekannt.

Statistische Vinylaromat-Dien-Copolymere (A) wie oben beschrieben werden bislang zur Modifizierung von Styrol-Polymeren eingesetzt. In Mischung mit einem Polystyrol lassen sich z.B. die Zähigkeit und die Spannungs-Rissbeständigkeit der Formteile signifikant verbessern.

Die Lactam-Zusammensetzungen können aus den entsprechenden Lactam-Komponenten (B) und den Vinylaromat-Dien-Copolymeren (A) durch Vermischen der Komponenten hergestellt werden und ergeben Lactam-Schmelzen mit verbesserter Viskosität. Diese Schmelzen finden Verwendung, bevorzugt im Bereich der aktivierten anionischen Lactam-Polymerisation (z.B. für Gusspolyamide).

Erfindungsgemäß werden die Vinylaromat-Dien-Copolymere (A) in einer Menge von 2 bis 30 Gew.-%, insbesondere von 3 bis 25 Gew.-%, bezogen auf die gesamte Zusammensetzung, mit einer Menge von 70 bis 78 Gew.-%, insbesondere 75 bis 97 Gew.-% an Lactam-Komponente (B) vermischt. Gegebenenfalls können weitere Komponenten (z.B. in einer Menge von 0 bis 20 Gew.-%) zugesetzt werden.

Die einsetzbaren Vinylaromat-Dien-Copolymere (A) enthalten in der Regel 40 bis 75 Gew.-% Vinylaromat-Einheiten und 25 bis 60 Gew.-% an Dien-Einheiten. Bevorzugte Vinylaromat-Einheit ist Styrol, bevorzugte Dien-Einheit ist Butadien.

Die Lactam-Schmelzen erhöhter Viskosität eignen sich besonders für die Aufnahme von Verstärkungs- und Füllstoffen (C) und zur Herstellung gefüllter Gusspolyamide. Weiterhin eignen sie sich auch für die Verwendung als Füllstoff- bzw. Faser-haltige Lactam-Schmelzen in einem Verfahren zur Herstellung von Polyamiden.

Die erfindungsgemäßen Guss-Polyamidteile, z.B. aus ε-Caprolactam hergestellt, weisen gute mechanische Eigenschaften auf. Aufgrund ihrer gegenüber Standardspritzguss-Teilen erhöhten Kristallinität sowie der höheren Molekulargewichte sind zahlreiche mechanische Eigenschaftswerte gegenüber durch Polykondensation hergestellten Polyamiden verbessert. Gusspolyamid enthaltend ein Vinylaromat-Dien-Copolymer (A) ist ein attraktiver Werkstoff.

Die verschiedenen Füllstoffe (C) und Zusatzstoffe (Z), die im Formteil anwesend sein sollen, können im Allgemeinen in die Lactam-Schmelze vor der Polymerisation eingebracht werden.

In einer bevorzugten Ausführungsform enthält die Lactam Zusammensetzung mindestens einen Füll- oder Verstärkungsstoff (C). Als Füll- und/oder Verstärkungsstoffe (C) kommen organische oder anorganische Füll- und/oder Verstärkungsstoffe (F) in Frage. Beispielsweise können anorganische Füllstoffe, wie Kaolin, Kreide, Wollastonit, Talkum, Calciumcarbonat, Silikate, Titandioxid, Zinkoxid, Graphit, Graphene, Glaspartikel, z.B. Glaskugeln, nanoskalige Füllstoff, wie Kohlenstoff-Nanoröhren ("carbo-nanotubes"), carbon black, Schichtsilikate, nano-skalige Schichtsilikate, nano-skaliges Aluminiumoxid ($Al_2O_3$), nano-skaliges Titandioxid ($TiO_2$) und nano-skaliges Siliciumdioxid ($SiO_2$), eingesetzt werden.

Weiterhin bevorzugt ist der Einsatz von Faserstoffen als Verstärkungsstoffe.

Die Füll- und/oder Verstärkungsstoffe (C) werden in der Regel ausgewählt aus der Gruppe umfassend Mineralien in für Thermoplast-Anwendungen üblicher Korngröße wie beispielsweise Kaolin, Kreide, Wollastonit oder Talkum. Wichtige Faserstoffe sind Kohlenstoff-, Aramid- oder Glasfasern, aber auch entsprechende textile Strukturen (Gewebe und Gelege) aus unidirektionalen Fasern, bevorzugt Glas- und Kohlenstoff-Fasern.

In den Lactam-Zusammensetzungen können ein aber auch mehrere Faserstoffe zum Einsatz kommen, ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern; und Naturfasern, wie Holzfasern, Flachsfasern, Hanffasern und Sisalfasern. Insbesondere bevorzugt ist der Einsatz von Glasfasern, insbesondere Schnittglasfasern, Kohlenstofffasern, Aramidfasern, Borfasern, Metallfasern oder Kaliumtitanatfasern. Die genannten Fasern können in Form von Kurzfasern, Langfasern oder als Gemisch von Kurz- und Langfasern eingesetzt werden. Hierbei weisen die Kurzfasern vorzugsweise eine mittlere Faserlänge im Bereich von 0,1 bis 1 mm auf. Weiterhin bevorzugt sind Fasern mit einer mittleren Faserlänge im Bereich von 0,5 bis 1 mm. Die eingesetzten Langfasern weisen vorzugsweise eine mittlere Faserlänge von über 1 mm, bevorzugt im Bereich von 1 bis 50 mm auf. Bevorzugt werden auch Matten aus den genannten organischen oder anorganischen Fasern eingesetzt.

Insbesondere können auch Mischungen der genannten Füll- und/oder Verstärkungsstoffe (C) eingesetzt werden. Besonders bevorzugt werden als Füll- und/oder Verstärkungsstoff (C) Glasfasern und/oder Glasfasermatten ausgewählt.

Die im oben beschriebene Verfahren hergestellte Lactam-Zusammensetzung enthält bevorzugt 30 bis 90 Gew.-%, insbesondere von 30 bis 80 Gew.-%, bevorzugt 30 bis 70 Gew.-%,bezogen auf die gesamte Zusammensetzung, an mindestens einem Füll- und/oder Verstärkungsstoff (C).

In einer bevorzugten Ausführungsform kann die Lactam-Zusammensetzung weitere Zusatzstoffe (Z) enthalten. Bevorzugt sind die Zusatzstoffe (Z) in einer Menge von 0 bis 10 Gew.-%, bevorzugt von 0 bis 5 Gew.-%, besonders bevorzugt von 0,1 bis 4 Gew.-% in der gesamten Zusammensetzung enthalten. Als Zusatzstoffe (Z) können beispielsweise Stabilisatoren, wie Kupfersalze, Farbstoffe, Antistatika, Füllöle, Oberflächenverbesserer, Sikkative, Entformungs-Hilfsmittel, Trennmittel, Antioxidantien, Lichtstabilisatoren, PVC-Stabilisatoren, Gleitmittel, Flammschutzmittel, Treibmittel, Schlagzähigkeits-Modifikatoren und Nukleierungshilfsmittel zugesetzt werden.

Bevorzugt enthält die Zusammensetzung als Zusatzstoff (Z) einen weiteren Schlagzähigkeits-Modifikator, insbesondere einen Polydien-Polymer (z.B. Polybutadien, Polyisopren) enthaltend Anhydrid und/oder Epoxygruppen. Das Polydien-Polymer weist insbesondere eine Glasübergangstemperatur unter 0°C, bevorzugt unter -10°C, besonders bevorzugt unter -20°C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden (z.B. Emulsionspolymerisation, Suspensionspolymerisation, Lösungspolymerisation, Gasphasenpolymerisation).

Die optionale Zugabe von Füll- und/oder Verstärkungsstoffen (C) und der weiteren Zusatzstoffen (Z) kann im Prinzip zu jeden Schritt des Herstellungsprozesses der Zusammensetzung erfolgen.

Die vorliegende Erfindung bezieht sich weiterhin auf die Verwendung einer Zusammensetzung erhalten (oder erhältlich) durch ein oben beschriebenes erfindungsgemäßes Verfahren zur Herstellung eines Polyamid-Formteils.

Die Polymer-Komponente A wird vorzugsweise in einer solchen Menge zugesetzt, dass die Viskosität der Zusammensetzung (bei 140°C) gerade 8 - 1000 mPas beträgt, jeweils ohne Füll-/Verstärkungsstoffe (C). Die Viskositäten von mindestens ca. 10 bis 500 mPa.s sind im Allgemeinen ausreichend, um je nach Art und Menge eine ausreichend stabile Dispersion der Füll- und Verstärkungsstoffe (C), z.B. der Glasfasern, zu erreichen. Andererseits sollte die Viskosität der Lactam-Schmelze (ohne Füll-/Verstärkungsstoffe) bevorzugt nicht höher als ungefähr 1200 mPas, besonders bevorzugt 1000 mPas sein, da andernfalls die Verarbeitbarkeit erschwert sein kann.

Zur Herstellung der erfindungsgemässen Lactam-Zusammensetzungen bzw. Lactam-Schmelzen können beispielsweise die Lactame B) mit der Polymer-Komponente (A) und den Füllstoffen (C) gemischt und aufgeschmolzen oder auch die Komponente (A) bzw. eine Lösung derselben in flüchtigen Lösungsmitteln mit geschmolzenen Lactamen (B) gemischt werden, gegebenenfalls mit anschließendem Abziehen des Lösungsmittels. Es können auch Konzentrate (Masterbatches) der Komponente (A), beispielsweise in Caprolactam, eingesetzt werden.

Die Herstellung der erfindungsgemäßen, gegebenenfalls verstärkten und/oder gefüllten, Guss-Polyamidteile erfolgt prinzipiell nach den üblichen Verfahren, bevorzugt jedoch nach der anionisch aktivierten Lactam-Polymerisation. Die Herstellung von Gusspolyamid-Teilen, ausgehend von niedrigviskosen Lactam-Schmelzen und Katalysatoren sowie Aktivatoren ist bekannt (siehe Vieweg, Müller; Kunststoff-Handbuch Bd. VI, Carl Hanser Verlag, München 1966). Gegenüber Pölyurethan-RIM-Systemen ist die Verfahrenstechnik einfacher, da z.B. aufgrund der sehr niedrigviskosen Lactam-Schmelzen drucklos und unter Einsatz einfacher Pumpen oder auch nach der Reaktionsspritztechnik gefördert werden kann.

Für viele Einsatzgebiete ist es wünschenswert, die guten mechanischen Eigenschaften von Gusspolyamid-Teilen weiter zu steigern, z.B. die Härte, Steifigkeit und Festigkeit, aber auch den Kriechmodul. Dies kann erfolgen, indem die beschriebenen Verstärkungs- bzw. Füllstoffe (C) zugesetzt werden. Die Viskosität der erfindungsgemäßen Lactam-Schmelzen kann sich sehr vorteilhaft auswirken, da trotz des Dichteunterschiedes z.B. Glasfasern nicht schnell sedimentieren. Dies macht die Herstellung eines glasfaserverstärkten Gusspolyamids auf konventionellem Wege möglich. Die Viskosität von Lactam-Schmelzen kann erfindungsgemäß auf einfache Weise deutlich verbessert werden.

Eine weitere Aufgabe der vorliegenden Erfindung ist gelöst, da neue polymere Komponenten zur Erhöhung der Schlagzähigkeit von Polyamid-Formteilen (insbesondere mit Glasfasergewebe) zur Verfügung gestellt werden, ohne die Viskosität der zugrunde liegenden Lactam-Schmelze deutlich zu erhöhen und/oder die Geschwindigkeit der anionischen Polymerisation zu beeinflussen.

Es wurde gefunden, dass sich die speziellen Vinylaromat-Dien-Copolymere (A) für den Einsatz im Reaktionsspritzguss (RIM)-Verfahren eignen, da durch den Einsatz dieser statistischen Vinylaromat-Dien-Copolymere die anionische Polymerisation nicht gestört wird und die Glasübergangstemperatur (Tg) des resultierenden Polymer-Blends nicht oder nicht wesentlich negativ beeinflusst werden.

Insbesondere der Polystyrol-Anteil in den statistischen Vinylaromat-Dien-Copolymeren (A) führt zu einer größeren Verträglichkeit mit der Polyamid-Komponente und verhindert eine Phasentrennung, selbst bei erhöhten Anteilen des Vinylaromat-Dien-Copolymers.

Im Falle eines Styrol-Butadien-Copolymers (A) wird der Zusammensetzung oftmals eine Menge von 3 bis 25 Gew.-%, bevorzugt 5 bis 20 Gew.-% dieser Komponente zugesetzt, wobei diese sich in der Lactam-Komponente (B) löst und eine Zunahme der Zähigkeit des Formteils bewirken kann. Wegen der auf Styrol und Butadien basierenden Struktur ist der Wassergehalt und die Wasseraufnahme der statistischen Vinylaromat-Dien-Copolymere vernachlässigbar und stört nicht die anionische Polymerisation.

Die anionische Polymerisation von Lactamen kann in einem Reaktionsformgieß- oder Reaktionsspritzgieß-Prozess erfolgen, wobei ein Katalysator (K) und weitere Additive während des Polymerisationprozesses der Lactamschmelze zugegeben werden. Die definierten Mengen an Katalysator (K), Aktivator (A) und anderen Additiven können in die aufgeschmolzene Lactam-Zusammensetzung (z.B. basierend auf Caprolactam und Styroflex) eingerührt werden. Es wird dadurch ein einfaches Verfahren bereitgestellt, das zu Gusspolyamid-Formteilen mit verbesserter Qualität führt.

Als Aktivator-Komponente (V) bei der Polymerisation eignen sich z.B. folgende Komponenten:

Aliphatische Diisocyanate wie Butylendiisocyanat, Hexamethylendiisocyanat, Octamethylendiisocyanat, Decamethylendiisocyanat, Undodecamethylendiisocyanat, Dodecamethylendiisocyanat, aber auch aromatische Diisocyanate, wie Toluyldiisocyanat, Isophorondiisocyanat, 4,4'-Methylenbis(phenyl-isocyanat), 4,4'-Methylenbis(cyclohexylisocyanat) oder aber Polyisocyanate wie Isocyanurate von Hexamethylendiisocyanat, Basonat® HI 100 der BASF SE, Allophanate wie Ethylallophanat oder deren Mischungen. Bevorzugt werden Hexamethylendiisocyanat, Isophorondiisocyanat, besonders bevorzugt ist Hexamethylendiisocyanat. Die Diisocyanate können durch Monoisocyanate ersetzt werden. Alternativ eignen sich als Aktivator-Komponente auch Disäure-halogenide, wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäure-bromid, Dodecamethylendisäurechlorid, Dodecamethylendisäurebromid aber auch aromatische Disäurehalogenid wie Toluylendisäurechlorid, Toluylenmethylen-disäurebromid, Isophorondisäurechlorid, Isophorondisäurebromid, 4,4'-Methylenbis-(phenylsäurechlorid, 4,4'-Methylenbis(phenylsäurebromid, 4,4'-Methylenbis(cyclohexylsäurechlorid, 4,4'-Methylenbis(cyclohexylsäurebromid oder deren Mischungen. Bevorzugt werden Hexamethylendisäurechlorid, Hexamethylendisäurebromid oder deren Mischungen, besonders bevorzugt ist Hexamethylendisäurechlorid. Die Disäurehalogenide können durch Monosäurehalogenide ersetzt werden.

Als Katalysator-Komponente (K) bei der Polymerisation eignen sich unter anderem:

Natrium-caprolactamat, Kalium-caprolactamat, Bromidmagnesium-caprolacta-mat, Chloridmagnesium-caprolacta-mat, Magnesiumbis-caprolactamat, Natriumhydride, Natrium-Metall, Natriumhydroxid, Natriummethoxid, Natriumethoxid, Natriumpropoxid, Natriumbutoxid, Kaliumhydrid, Kalium-Metall, Kaliumhydroxid, Kaliummethoxid, Kaliumethoxid, Kaliumpropoxid und Kaliumbutoxid. Bevorzugt wird die Katalysator-Komponente für das erfindungsgemäße Verfahren ausgewählt aus der Gruppe umfassend Natriumhydride, Natrium-Metall, Natrium-caprolactamat, besonders bevorzugt ist dabei Natriumcaprolactamat (z.B. das handelsübliche Produkt Bruggolen® C 10, eine Lösung aus 18 Gew.-% Natriumcaprolactamat in Caprolactam).

Als Lösungsmittel (L) bei der Polymerisation können folgende Komponenten eingesetzt werden:

Dimethylsulfoxid, Methylchlorid, Methylenchlorid, Dioxan, Tetrahydrofuran, Acetonitril, Tetrahydropyran, N-Methylpyrrolidone, N-Ethylpyrrolidone, Dimethylformamid, Methanol, Ethanol, n-Propanol, iso-Propanol oder deren Gemische. Bevorzugt werden Dimethylsulfoxid, Methylchlorid, Methylenchlorid, Tetrahydrofuran oder deren Gemische, besonders bevorzugt sind Dimethyl-sulfoxid, Methylenchlorid oder deren Gemische.

Das Molverhältnis von Aktivator-Komponente (V) zum Lactam B kann in weiten Grenzen variiert werden, beträgt in der Regel 0,01:1 bis 100:1, bevorzugt 0,1:1 bis 10:1, besonders bevorzugt 0,5:1 bis 1,5:1.

Das Molverhältnis vom Lösungsmittel (L) zur Aktivator-Komponente (V) kann in weiten Grenzen variiert werden, beträgt in der Regel 100:1 bis 0:1, bevorzugt 50:1 bis 0,5:1, besonders bevorzugt 25:1 bis 1:1.

Das Molverhältnis vom Lösungsmittel (L) zum Lactam (B) kann in weiten Grenzen variiert werden, beträgt in der Regel 100:1 bis 0:1, bevorzugt 50:1 bis 0,5:1, besonders bevorzugt 10:1 bis 1:1.

Das Molverhältnis von Lactam (B) zum Katalysator (K) kann in weiten Grenzen variiert werden, beträgt in der Regel 1:1 bis 10.000:1, bevorzugt 10:1 bis 1.000:1, besonders bevorzugt 100:1 bis 3.000:1.

Das Molverhältnis von Aktivator (V) zum Katalysator (K) kann in weiten Grenzen variiert werden, beträgt in der Regel 10:1 bis 1:100, bevorzugt 5:1 bis 1:10, besonders bevorzugt 2:1 bis 1:5.

In einer bevorzugten Ausführungsform der Erfindung werden eine Copolymer-Komponente (A) und eine Lactam-Komponente (B) eingesetzt. In einer weiteren Ausführungsform des erfindungsgemäßen Verfahrens wird genau ein Katalysator (K) eingesetzt. In einer weiteren Ausführungsform des erfindungsgemäßen Verfahrens wird genau ein Initiator (I) eingesetzt.

In einer besonders bevorzugten Ausführungsform des erfindungsgemäßen Verfahrens werden genau ein Lactam (B), insbesondere Caprolactam, genau ein Katalysator (K) und genau ein Initiator (I) eingesetzt.

Das erfindungsgemäße Verfahren kann unter anderem als Guss-Polymerisation, Sprüh-Polymerisation, reaktive Extrusion, Dispersionspolymerisation oder so genanntes "Rotomolding" geführt werden.

**Beispiele**

Die Erfindung wird anhand von nachstehenden Beispielen näher erläutert.

**Beispiele 1, 2 und 3** (Herstellung der Lactam-Schmelzen und Viskositätsmessungen)

100 Gramm $\varepsilon$-Caprolactam wurden mit verschiedenen Mengen (5 oder 10 oder 20 Gew.-%) eines handelsüblichen, statistischen Styrol-Butadien-Copolymers (65% Gew.-% Styrol, 35 Gew.-% Butadien; Styroflex 2G66, BASF SE) vermischt, unter $N_2$-Atmosphäre auf 140°C erhitzt und bis zum vollständigen Lösen des Copolymers gerührt (1,5 bis 2,5 h). Bei Styroflex 2G66 handelt es sich um ein statistisches Vinylaromat-Dien-Copolymer, das aus zwei, aus Styrol-Monomeren aufgebauten, eine Hartphase bildenden Blöcken (S) und einem, Styrol und Butadien-Monomere aufweisenden, statistischen, eine Weichphase bildenden Block (S/B) besteht.

Anschließend wurden mit einem Rotationsviskosimeter Physica MCR301 die Viskositäten der Zusammensetzungen bei Temperaturen von 110°C und 140°C bestimmt.

Die gemessenen Werte sind in Tabelle 1 zusammengestellt.

Tabelle 1:

| Beispiel | Polymer | 110°C Viskosität [mPa·s] | 140°C Viskosität [mPa·s] |
|---|---|---|---|
| 1 | 5% Styroflex 2G66 | 20 | 10 |
| 2 | 10% Styroflex 2G66 | 110 | 50 |
| 3 | 20% Styroflex 2G66 | 1400 | 480 |
| 5 | 5% SB-Diblock-Copolymer | 60 | 30 |
| 6 | 10% SB-Diblock-Copolymer | 1530 | 1000 |
| 7 | 20% SB-Diblock-Copolymer | 4200 | 2100 |

In den Vergleichsbeispielen 5, 6 und 7 wurden unter analogen Bedingungen verschiedene Mengen eines Styrol-Butadien-Diblock-Copolymer (ohne statistischen Block) gemäß EP-A 0 459 199 (Bayer) eingesetzt.

Diese Versuchsergebnisse zeigten, dass das erfindungsgemäße statistische Vinylaromat-Dien-Copolymer in den untersuchten Lactam-Schmelzen (aus $\varepsilon$-Caprolactam) deutlich niedrigere Viskositäten in der Schmelze bewirkte als ein vergleichbares Vinylaromat-Dien-Blockcopolymer. Dies führt zu einer verbesserten Verarbeitung der Lactam-Zusammensetzungen.

**Beispiele 8, 9, 10, 11 und 12** (Anionische Polymerisationen der Lactam-Schmelzen im Kalorimeter)

Die folgenden Polymerisationsreaktionen wurden bei 140°C unter Rühren in trockener Stickstoffatmosphäre in einem 50 ml Glaskalorimeter, der mit einem fettfreien Teflon-Stopfen verschlossen und mit einem Thermoelement versehen war, durchgeführt.

Die DSC-Messungen wurden mittels eines üblichen Geräts (Maia DSC200F3 der Firma Netzsch) durchgeführt. Die Einwaagen betrugen jeweils ca. 10 mg, die Heiz- und Kühlraten betrugen 20 K/min.

Eine Menge von 2,0 g des in den Beispielen 1, 2 und 3 benutzten statistischen Styrol-Butadien-Copolymers (Styroflex 2G66) wurde unter Rühren innerhalb von 2.5 Stunden bei 140°C in 7,4 g ε-Caprolactam unter N$_2$-Atmosphäre gelöst.

Alternativ wurde eine Menge von 9,4 g der in den Beispielen 1, 2 und 3 benutzten Schmelze aus statistischem Styrol-Butadien-Copolymer (Styroflex 2G66) und ε-Capro-lactam bei 140° C unter N$_2$-Atmosphäre hergestellt.

Anschließend wurden 0,4 Gramm, also 4 Gew.-% des Katalysators (K) Brüggolen C10 (18% Natriumcaprolactam in Caprolactam, Brüggemann KG, Heilbronn) und 0,2 Gramm, also 2 Gew.-% des Aktivators (V) Brüggolen C20 (80% Caprolactam-blockiertes 1,6-Hexamethylendiisocyanat in Caprolactam, Brüggemann KG, Heilbronn) als Feststoff bei 20°C in die schmelz-flüssige Mischung zugegeben.

Über eine Zeit von 15 min wurde die Entwicklung der internen Temperatur mit Hilfe eines Thermofühlers gemessen. Anschließend wurde durch Abkühlen des Reaktors in Wasser (10°C) gequencht.

Tabelle 2 zeigt die als Beispiele 8 bis 12 erhaltenen Polymer-Zusammensetzungen, wobei die Zusammensetzungen 8 bis 11 ein statistisches Styrol-Butadien-Copolymer (Styroflex 2G66) enthalten, während Beispiel 12 ein Styrol-Butadien-Diblock-Copolymer (ohne statistischen Block) gemäß EP-A 0 459 199 (Bayer) enthält.

Tabelle 2:

| | Menge SB-Copolym. (Gew.-%) | Monomer (Gew.-%) | Kat. (K) C10 (Gew.-%) | (V) C20 (Gew.-%) | Tmax (°C) | tmax (s) | Dichte (g/ml) |
|---|---|---|---|---|---|---|---|
| 8 | - | 94 | 4 | 2 | 186,7 | 78 | 1,131 |
| 9 | 5 | 89 | 4 | 2 | 184,8 | 77 | 1,119 |
| 10 | 10 | 84 | 4 | 2 | 179,6 | 81 | 1,071 |
| 11 | 20 | 74 | 4 | 2 | 176,0 | 122 | 1,065 |
| 12 | 20 (Bayer) | 74 | 4 | 2 | 146,3 | 344 | 1,016 |

**Beispiel 12** (Vergleichsbeispiel)

2,0 Gramm, also 20 Gew.-%, des in den Beispielen 5, 6 und 7 benutzten Styrol-Butadien-Diblock-Copolymers gemäß EP-A 0 459 199 (Bayer) wurden unter Rühren innerhalb von 1.5 h bei 140°C in 7,4 g ε-Caprolactam unter N$_2$-Atmosphäre gelöst.

Anschließend wurden 0,4 Gramm, also 4 Gew.-% des Katalysators (K) Brüggolen C10 (18% Natriumcaprolactam in Caprolactam, Brüggemann KG, Heilbronn) und 0,2 Gramm, also 2 Gew.-% des Aktivators (V) Brüggolen C20 (80% Caprolactam-blockiertes 1,6-Hexamethylendiisocyanat in Caprolactam, Brüggemann KG, Heilbronn) als Feststoff bei 20° C in die Schmelze zugegeben.

Auf Grund der hohen Viskosität der Schmelze konnten jedoch weder der Katalysator (K) noch der Aktivator (V) in der Masse untergemischt werden. Sie verblieben auf der Schmelzoberfläche. Somit konnte keine vollständige Polymerisation durchgeführt werden.

**Beispiel 13** (Polymerisationen der Lactam-Schmelzen im Kalorimeter)

1,0 Gramm des in den Beispielen 1 bis 3 benutzten Styrol-Butadien-Copolymers (Styroflex 2G66) und 1,0 Gramm eines handelsübliches Impact-Modifyers, eines Polyetheramins (Polypropylenglykol-Triamin, PEA, M = 5000 g/mol, *PEA T5000,* BASF) wurden unter Rühren innerhalb von 1.5 bis 2.5 h in 7,4 g ε-Caprolactam, bei 140°C unter N$_2$-Atmosphäre gelöst.

Anschließend wurden 0,267 g, also 2,67 Gew.-% des Aktivators (V) Brüggolen C20 (80% Caprolactam-blockiertes 1,6-Hexamethylendiisocyanat in Caprolactam, Brüggemann KG, Heilbronn) und 0,4 g, also 4 Gew.-% des Katalysators (K) Brüggolen C10 (18% Natriumcaprolactam in Caprolactam, Brüggemann KG, Heilbronn) als Feststoff bei 20° C in die schmelzflüssige Mischung zugegeben.

Über eine Zeit von 15 min wurde die Entwicklung der internen Temperatur mit Hilfe eines Thermofühlers gemessen. Anschließend wurde durch Abkühlen des Reaktors in Wasser (10°C) gequencht.

Tabelle 3 zeigt als Beispiele 12 und 13 die Eigenschaften der erhaltenen PolymerZusammensetzung.

Tabelle 3

| Bsp. | Menge SB-Copol (Gew.-%) | PEA (Gew.-%) | Monomer (Gew-%) | C10 (Gew.-%) | C20 (Gew.-%) | Tmax (°C) | tmax (s) | Dichte (g/ml) |
|---|---|---|---|---|---|---|---|---|
| 13 | 10% | 10 | 73,33 | 4 | 2,67 | 178,8 | 102 | 1,087 |

(fortgesetzt)

| Bsp. | Menge SB-Copol (Gew.-%) | PEA (Gew.-%) | Monomer (Gew.-%) | C10 (Gew.-%) | C20 (Gew.-%) | Tmax (°C) | tmax (s) | Dichte (g/ml) |
|---|---|---|---|---|---|---|---|---|
| 12 | 10% Bayer | 10 | 73,33 | 4 | 2.67 | 158.3 | 244 | |

Die Versuchsergebnisse zeigen, dass das erfindungsgemäße statistische Vinylaromat-Dien-Copolymer bzw. das erfindungsgemäße Verfahren Polyamide ohne weitere Verzögerung der Reaktionsgeschwindigkeit und ohne Beeinflussung der Glasübergangstemperatur (Tg) liefert.

In die statistische Vinylaromat-Dien-Copolymer-Zusammensetzung können Glasfasermatten oder Aramidfaser-matten eingebracht werden.

**Beispiel 14** (Herstellung eines Polyamid-Formkörpers mit einem Gehalt von 10% an Styroflex 2G66)

Die Herstellung eines Polyamid-Formkörpers erfolgte in Anlehnung an das literaturbekannte RIM-Verfahren in einem selbst konstruierten und beheizbaren Formträger mit den Abmessungen 200 x 50 x 2 mm. Der Formträger war über einen Teflon-Schlauch verbunden mit einem 1 l Glasrundkolben mit Magnetrührstab, in dem die reaktive Mischung angesetzt wurde. Diese konnte durch Anlegen eines leichten $N_2$-Überdrucks auf den Glaskolben in den temperierten und mit Fasergewebe gefüllten Formträger gepresst werden.

Es wurden 5,0 g des in den Beispielen 1 bis 3 benutzten Styrol-Butadien-Copolymers (Styroflex 2G66), 0,1 g Calciumstearat und 42,0 g Caprolactam unter Rühren innerhalb von 1,5 h bei 140°C unter $N_2$-Atmosphäre in einem Glasrundkolben gelöst.

Anschließend wurden 1,0 g, also 2 Gew.-% des Aktivators (V) Brüggolen C20 (80% Caprolactam-blockiertes 1,6-Hexamethylendiisocyanat in Caprolactam, Brüggemann KG, Heilbronn) als Feststoff bei 20°C zugegeben und die resultierende schmelzflüssige Mischung für 5 Minuten entgast. Daraufhin wurden 2,0 g, also 4 Gew.-% des Katalysators (K) Brüggolen C10 (18% Natriumcaprolactam in Caprolactam, Brüggemann KG, Heilbronn) als Feststoff bei 20°C zugegeben. Sogleich danach wurde diese reaktive Mischung in den geschlossenen, auf 150°C beheizten und mit 5 Lagen eines handelsüblichen Fasergewebe (vom Typ Interglas 92125; Schlichte FK800) gefüllten Formträger durch Anlegen eines leichten $N_2$-Überdrucks auf den Glaskolben eingetragen. Nach 10 min bei 150°C in der Form wurde das fertige Formteil ohne Entformungs-Probleme aus der Form entnommen. Es wurde eine Polyamid-Platte mit glatter Oberfläche und ohne Verfärbungen erhalten.

**Patentansprüche**

1. Lactam-Zusammensetzung, die folgende Komponenten enthält:

   a) 3 bis 25 Gew.-%, bevorzugt 5 bis 20 Gew.-% (bezogen auf die Summe der Komponenten A und B), mindestens eines statistischen Vinylaromat-Dien-Copolymers (A), wobei das statistische Vinylaromat-Dien-Copolymer (A) besteht aus mindestens einem, aus vinylaromatischen Monomeren aufgebauten, eine Hartphase bildenden Block (S) und mindestens einem, vinylaromatische Monomere und Dien-Monomere aufweisenden, statistischen, eine Weichphase bildenden Block (S/B),
   b) 75 bis 97 Gew.-%, bevorzugt 80 bis 95 Gew.% (bezogen auf die Summe der Komponenten A und B), mindestens einer Lactam-Komponente (B), inbesondere ε-Caprolactam,
   c) ggf. einen oder mehrere Füll- und/oder Verstärkungsstoffe (C), sowie
   d) ggf. einen oder mehrere Zusatzstoffe (Z).

2. Lactam-Zusammensetzung nach Anspruch 1, **dadurch gekennzeichnet, dass** in dem statistischen Vinylaromat-Dien-Copolymer (A) einerseits die Monomere Styrol, alpha-Methylstyrol, m-Methylstyrol und/oder p-Methylstyrol und andererseits die Monomere Butadien, Isopren und/oder 2,3-Dimethylbutadien zum Einsatz kommen.

3. Lactam-Zusammensetzung nach Anspruch 1 oder 2, **dadurch gekennzeichnet, dass** das statistische Vinylaromat-Dien-Copolymer (A) aus Styrol und Butadien aufgebaut ist.

4. Lactam-Zusammensetzung nach einem der Ansprüche 1 bis 3, **dadurch gekennzeichnet, dass** im statistischen Vinylaromat-Dien-Copolymer (A) das Molekulargewicht des Blocks S/B zwischen 10.000 und 250 000 liegt, und das Molekulargewicht des Blocks S (bzw. der Blöcke S) zwischen 5.000 und 200 000 [g/mol] liegen, und das gesamte Molekulargewicht des Vinylaromat-Dien-Copolymers (A) im Bereich von 80.000 bis 300.000[g/mol] liegt.

5. Lactam-Zusammensetzung nach einem der Ansprüche 1 bis 4, **dadurch gekennzeichnet, dass** als Lactame-Komponente ε-Caprolactam, Piperidon, Pyrrolidon, Lauryllactam oder eine Mischung zweier oder mehrerer der genannten Monomere eingesetzt wird.

6. Lactam-Zusammensetzung nach einem der Ansprüche 1 bis 5, **dadurch gekennzeichnet, dass** sie Füll- und/oder Verstärkungsstoffe (C) in einer Menge von 5 bis 80 Gew.-% (bezogen auf die Summe aller Komponenten A, B, C und Z) enthält.

7. Lactam-Zusammensetzung nach einem der Ansprüche 1 bis 6, **dadurch gekennzeichnet, dass** sie Zusatzstoffe (Z) in einer Menge von 1 bis 10 Gew.-% (bezogen auf die Summe aller Komponenten A, B, C und Z) enthält.

8. Lactam-Zusammensetzung nach einem der Ansprüche 1 bis 7, **dadurch gekennzeichnet, dass** sie in der Schmelze bei 140° C eine Viskosität von 10 bis 1000 mPas aufweist.

9. Lactam-Zusammensetzung nach einem der Ansprüche 1 bis 7, **dadurch gekennzeichnet, dass** sie in der Schmelze bei 140° C eine Viskosität von 10 bis 500 mPas aufweist.

10. Verwendung eines statistischen Vinylaromat-Dien-Copolymers (A), das aus mindestens einem, aus vinylaromatischen Monomeren aufgebauten, eine Hartphase bildenden Block (S) und mindestens einem, vinylaromatische Monomere und Dien-Monomere aufweisenden, statistischen, eine Weichphase bildenden Block (S/B) besteht, zur Herstellung einer Lactam-Schmelze.

11. Verwendung einer Lactam-Zusammensetzung nach einem der Ansprüche 1 bis 9 zur Herstellung von Polyamiden durch aktivierte anionische Polymerisation (Gusspolyamiden), ggf. unter Verwendung eines Katalysators (K) und/oder eines Aktivators (V).

12. Polyamid-Artikel, insbesondere Gusspolyamid-Artikel, hergestellt aus einer Lactam-Zusammensetzung nach einem der Ansprüchen 1 bis 9, ggf. unter Verwendung eines Katalysators (K) und/oder eines Aktivators (V).

13. Verfahren zur Herstellung von Polyamiden unter Verwendungen einer Lactam-Zusammensetzung nach einem der Ansprüche 1 bis 9, **dadurch gekennzeichnet, dass** die Lactam-Zusammensetzung in geschmolzener Form, ggf. in Anwesenheit eines Katalysators (K) und/oder eines Aktivators (V), nach dem Verfahren der aktivierten anionischen Polymerisation in Gusspolyamide überführt wird.

**Claims**

1. A lactam composition which comprises the following components:

   a) from 3 to 25% by weight, preferably from 5 to 20% by weight (based on the entirety of components A and B) of at least one random vinylaromatic-diene copolymer (A), where the random vinylaromatic-diene copolymer (A) is composed of at least one block (S) which forms a hard phase and which is composed of vinylaromatic monomers, and of at least one random block (S/B) which forms a soft phase and which has vinylaromatic monomers and diene monomers,
   b) from 75 to 97% by weight, preferably from 80 to 95% by weight (based on the entirety of components A and B) of at least one lactam component (B), in particular ε-caprolactam,
   c) optionally one or more fillers and/or reinforcing materials (C), and also
   d) optionally one or more additives (Z).

2. The lactam composition according to claim 1 or 2, wherein the random vinylaromatic-diene copolymer (A) firstly uses the monomers styrene, alpha-methylstyrene, m-methylstyrene, and/or p-methylstyrene, and secondly uses the monomers butadiene, isoprene, and/or 2,3-dimethylbutadiene.

3. The lactam composition according to claim 1 or 2, wherein the random vinylaromatic-diene copolymer (A) is composed of styrene and butadiene.

4. The lactam composition according to any of claims 1 to 3, wherein, in the random vniylaromatic-diene copolymer (A) the molar mass of the block S/B is from 10 000 to 250 000, and the molar mass of the block S (or of the blocks S) is from 5000 to 200 000 [g/mol], and the total molar mass of the vinylaromatic-diene copolymer (A) is in the range from 80 000 to 300 000 [g/mol].

5. The lactam composition according to any of claims 1 to 4, wherein the lactam component used comprises ε-caprolactam, piperidone, pyrrolidone, laurolactam, or a mixture of two or more of the abovementioned monomers.

6. The lactam composition according to any of claims 1 to 5, which comprises an amount of from 5 to 80% by weight (based on the entirety of all of components A, B, C, and Z) of fillers and/or reinforcing materials (C).

7. The lactam composition according to any of claims 1 to 6, which comprises an amount of from 1 to 10% by weight (based on the entirety of all of components A, B, C, and Z) of additives (Z).

8. The lactam composition according to any of claims 1 to 7, the viscosity of which in the melt at 140°C is from 10 to 1000 mPas.

9. The lactam composition according to any of claims 1 to 7, the viscosity of which in the melt at 140°C is from 10 to 500 mPas.

10. The use of a random vinylaromatic-diene copolymer (A) which is composed of at least one block (S) which forms a hard phase and which is composed of vinylaromatic monomers, and of at least one random block (S/B) which forms a soft phase and which has vinylaromatic monomers and diene monomers, for producing a lactam melt.

11. The use of a lactam composition according to any of claims 1 to 9 for producing polyamides via activated anionic polymerization (cast polyamides), optionally with use of a catalyst (K) and/or of an activator (V).

12. A polyamide item, in particular cast polyamide item, produced from a lactam composition according to any of claims 1 to 9, optionally with use of a catalyst (K) and/or of an activator (V).

13. A process for producing polyamides with use of a lactam composition according to any of claims 1 to 9, which comprises converting the lactam composition in molten form, optionally in the presence of a catalyst (K) and/or of an activator (V), into cast polyamides by the process of activated anionic polymerization.

**Revendications**

1. Composition de lactame, contenant les composants suivants :

   a) 3 à 25 % en poids, de préférence 5 à 20 % en poids (par rapport à la somme des composants A et B), d'au moins un copolymère statistique de composé aromatique de vinyle-diène (A), le copolymère statistique de composé aromatique de vinyle-diène (A) étant constitué d'au moins une séquence (S) formant une phase dure, formée à partir de monomères aromatiques de vinyle, et d'au moins une séquence statistique (S/B) formant une phase souple, comprenant des monomères aromatiques de vinyle et des monomère diènes,
   b) 75 à 97 % en poids, de préférence 80 à 95 % en poids (par rapport à la somme des composants A et B), d'au moins un composant lactame (B), notamment l'ε-caprolactame,
   c) éventuellement une ou plusieurs charges et/ou matières renforçantes (C), et
   d) éventuellement un ou plusieurs additifs (Z).

2. Composition de lactame selon la revendication 1, **caractérisée en ce que**, d'une part, les monomères styrène, alpha-méthylstyrène, m-méthylstyrène et/ou p-méthylstyrène et, d'autre part, les monomères butadiène, isoprène et/ou 2,3-diméthylbutadiène sont utilisés dans le copolymère statistique de composé aromatique de vinyle-diène (A).

3. Composition de lactame selon la revendication 1 ou 2, **caractérisée en ce que** le copolymère statistique de composé aromatique de vinyle-diène (A) est formé à partir de styrène et de butadiène.

4. Composition de lactame selon l'une quelconque des revendications 1 à 3, **caractérisée en ce que**, dans le copolymère statistique de composé aromatique de vinyle-diène (A), le poids moléculaire de la séquence S/B est compris entre 10 000 et 250 000, et le poids moléculaire de la séquence S (ou des séquences S) est compris entre 5 000 et 200 000 [g/mol], et le poids moléculaire total du copolymère de composé aromatique de vinyle-diène (A) se situe dans la plage allant de 80 000 à 300 000 [g/mol].

5. Composition de lactame selon l'une quelconque des revendications 1 à 4, **caractérisée en ce que** l'ε-caprolactame, la pipéridone, la pyrrolidone, le lauryllactame ou un mélange de deux ou plus des monomères cités est utilisé en tant que composant lactame.

6. Composition de lactame selon l'une quelconque des revendications 1 à 5, **caractérisée en ce qu'**elle contient des charges et/ou des matières renforçantes (C) en une quantité de 5 à 80 % en poids (par rapport à la somme de tous les composants A, B, C et Z).

7. Composition de lactame selon l'une quelconque des revendications 1 à 6, **caractérisée en ce qu'**elle contient des additifs (Z) en une quantité de 1 à 10 % en poids (par rapport à la somme de tous les composants A, B, C et Z).

8. Composition de lactame selon l'une quelconque des revendications 1 à 7, **caractérisée en ce qu'**elle présente une viscosité de 10 à 1 000 mPas à l'état fondu à 140 °C.

9. Composition de lactame selon l'une quelconque des revendications 1 à 7, **caractérisée en ce qu'**elle présente une viscosité de 10 à 500 mPas à l'état fondu à 140 °C.

10. Utilisation d'un copolymère statistique de composé aromatique de vinyle-diène (A), qui est constitué d'au moins une séquence (S) formant une phase dure, formée à partir de monomères aromatiques de vinyle, et d'au moins une séquence statistique (S/B) formant une phase souple, comprenant des monomères aromatiques de vinyle et des monomère diènes, pour la fabrication d'une masse fondue de lactame.

11. Utilisation d'une composition de lactame selon l'une quelconque des revendications 1 à 9 pour la fabrication de polyamides par polymérisation anionique activée (polyamides moulés), éventuellement en utilisant un catalyseur (K) et/ou un activateur (V).

12. Article en polyamide, notamment article en polyamide moulé, fabriqué à partir d'une composition de lactame selon l'une quelconque des revendications 1 à 9, éventuellement en utilisant un catalyseur (K) et/ou un activateur (V).

13. Procédé de fabrication de polyamides utilisant une composition de lactame selon l'une quelconque des revendications 1 à 9, **caractérisé en ce que** la composition de lactame sous forme fondue est transformée en polyamides moulés par le procédé de polymérisation anionique activée, éventuellement en présence d'un catalyseur (K) et/ou d'un activateur (V).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0766706 A
- EP 0859803 A
- DE 4420952 A
- US 2512606 A
- US 3393210 A
- EP 0459199 A

**In der Beschreibung aufgeführte Nicht-Patentliteratur**

- Kunststoff-Handbuch. Polyamide. Carl-Hanser-Verlag, 1966, vol. VI
- **J.L.M. VAN DER LOOS.** *ACS Symposium Series,* 1985, vol. 270, 181-191
- **VIEWEG, MÜLLER.** Kunststoff-Handbuch. Carl Hanser Verlag, 1966, vol. VI